# EUROPÄISCHE PATENTSCHRIFT

(11) **EP 2 959 760 B1**
(45) Veröffentlichungstag und Bekanntmachung des Hinweises auf die Patenterteilung: **22.06.2016**
(21) Anmeldenummer: 15175409.0
(22) Anmeldetag: 23.08.2013
(51) Int. Cl.: A01B 73/04

(54) **BODENBEARBEITUNGSMASCHINE**
SOIL WORKING MACHINE
MACHINE DE TRAITEMENT DE SOL

(30) Priorität: 20.09.2012 DE 102012108852; 12.07.2013 DE 102013011694
(43) Veröffentlichungstag der Anmeldung: 30.12.2015
(62) Teilanmeldung aus: 13401093.3
(73) Patentinhaber: Amazonen-Werke H. Dreyer GmbH & Co. KG, 49205 Hasbergen (DE)
(72) Erfinder: Bornhorst, Werner, 49413 Dinklage (DE); Gieseke, Reinhart, 27798 Hude (DE)

(56) Entgegenhaltungen:
- EP-A1- 1 698 219
- GB-A- 2 071 474

## Beschreibung

Die Erfindung betrifft eine Bodenbearbeitungsmaschine gemäß des Oberbegriffes des Patentanspruches 1.

Eine derartige Bodenbearbeitungsmaschine ist in EP 1 698 219 A1 beschrieben. Diese Bodenbearbeitungsmaschine weist einen als Mittelrahmen ausgebildeten Anbaubock auf, an dem Dreipunktkupplungselemente zum Anbau der Bodenbearbeitungsmaschine an dem Dreipunktkraftheber eines Ackerschlepper angeordnet sind. An dem Mittelrahmen sind auf seinen beiden Seiten Gelenkelemente angeordnet, die mit an dem als Kastenbalken ausgebildeten Tragrahmen angeordneten Gelenkelementen über Gelenkbolzen miteinander schwenkbar verbunden sind und die Tragkräfte übertragenden Schwenkgelenke bilden. An dem Mittelrahmen ist ein Zentralgetriebe mit einem Getriebegehäuse angeordnet, welches in seinem jeweiligen Außenbereich eine kreisförmige Aussparung aufweist, in welche ein kreisförmiger Ansatz des den jeweiligen Kastenbalken zugeordneten und die Zwischenwelle aufnehmenden Getriebegehäuses eingreift. Dieses ineinandergreifen der verschwenkbar zueinander angeordneten Getriebegehäuse dient lediglich der Zentrierung dieser Gehäuse zueinander. Die Schwenkverbindung zwischen den ineinandergreifenden Getriebegehäusen hat keine tragende Funktion zur Übertragung von Tragkräften vom Mittelrahmen auf die seitlichen Tragrahmen und umgekehrt. Hierzu sind separate Rahmenteile, die nicht Bestandteil des Getriebegehäuses des Zentralbetriebes sind, vorgesehen.

Um die Gelenkverbindungen zwischen dem Mittelrahmen und den als Kastenbalken ausgebildeten Tragrahmen zu vereinfachen erfindungsgemäß vorgesehen, dass jeweils eine der an dem Kastenbalken angeordneten Gelenklaschen von dem Getriebegehäuse des Zwischengetriebes gebildet wird.

Infolge dieser Maßnahme bildet das Getriebegehäuse des Zwischengetriebes eine Gelenklasche der Gelenkelemente, so dass ein separates Bauteil für eine der dem Kastenbalken zugeordneten Gelenklaschen nicht erforderlich ist.

In einer bevorzugten Ausführung ist vorgesehen, dass das jeweilige Getriebegehäuse des Zwischengetriebes die vordere Gelenklasche der Schwenkgelenke bildet.

Somit wird der Aufbau der den Mittelrahmen und die seitlichem Tragrahmen miteinander verbindenden und Tragkräfte übertragenden Schwenkgelenke vereinfacht.

Hierbei bildet das Getriebegehäuse des Zentralgetriebes tragender Bestandteil des Mittelrahmens ist und auf jeder Seite der Bodenbearbeitungsmaschine zumindest ein Gelenkelement eines Schwenkgelenkes des Mittelrahmens.

In Folge dieser Maßnahme kann beim Mittelrahmen auf der Seite, auf der das Getriebegehäuse mit dem Stirnradtrieb des Zentralbetriebes angeordnet ist, auf zusätzliche Bauteile, die die Gelenkelemente des Schwenkgelenkes bilden, verzichtet werden. Diese Gelenkelemente werden von dem Getriebegehäuse selber gebildet. Hierdurch wird die Ausgestaltung des Mittelrahmens unter Verzicht auf zusätzliche Bauteile zur Schaffung von Schwenkelementen erheblich vereinfacht.

Bei einer Bodenbearbeitungsmaschine, welche auf der Vorder- und Rückseite des Tragrahmens und des jeweiligen Tragrahmen ein die Schwenkelemente aufweisendes Schwenkgelenk aufweist, ist vorgesehen, dass auf der Seite, auf der das Getriebegehäuse angeordnet ist, die Gelenkelemente des Schwenkgelenkes nur von den am Getriebegehäuse des Zentralgetriebes angeordneten Schwenkelementen gebildet werden. Somit wird eine einfache Ausgestaltung der Tragrahmen und des Mittelrahmens sowie deren Schwenkgelenke zur Tragkraftübertragung erreicht.

Weitere Einzelheiten der Erfindung sind der Beispielsbeschreibung zu entnehmen. Die Zeichnungen zeigen
- Fig. 1: die erfindungsgemäße Bodenbearbeitungsmaschine mit Mittelrahmen und zwei daran mittels Schwenkgelenken einklappbar angeordneten seitlichen als Kastenbalken ausgebildete Tragrahmen in Arbeitsstellung und in perspektivischer Ansicht von hinten,
- Fig. 2: die erfindungsgemäße Bodenbearbeitungsmaschine mit Mittelrahmen und zwei daran mittels Schwenkgelenken einklappbar angeordneten seitlichen als Kastenbalken ausgebildete Tragrahmen in Transportstellung und in der Ansicht von hinten,
- Fig. 3: der mittlere Bereich der Bodenbearbeitungsmaschine gemäß Fig.1 in vergrößertem Maßstab,
- Fig. 4: der mittlere Bereich der Bodenbearbeitungsmaschine gemäß Fig.3, jedoch in Explosionsdarstellung,
- Fig. 5: die Bodenbearbeitungsmaschine in der Ansicht XI - XI und
- Fig. 6: der Bereich der Schwenklagerung der Bodenbearbeitungsmaschine in der Ansicht XI - XI.

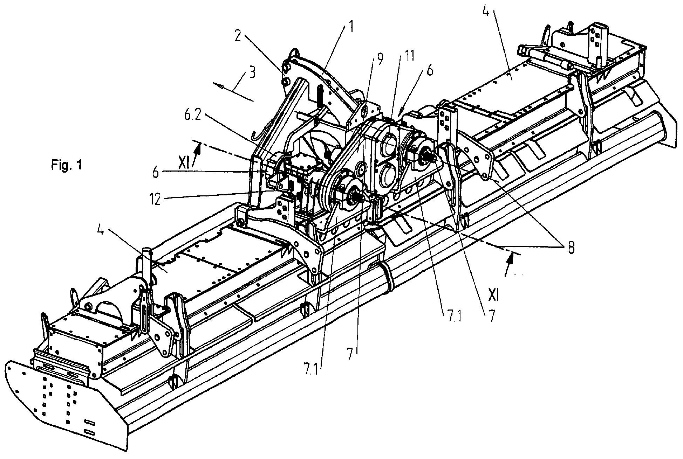

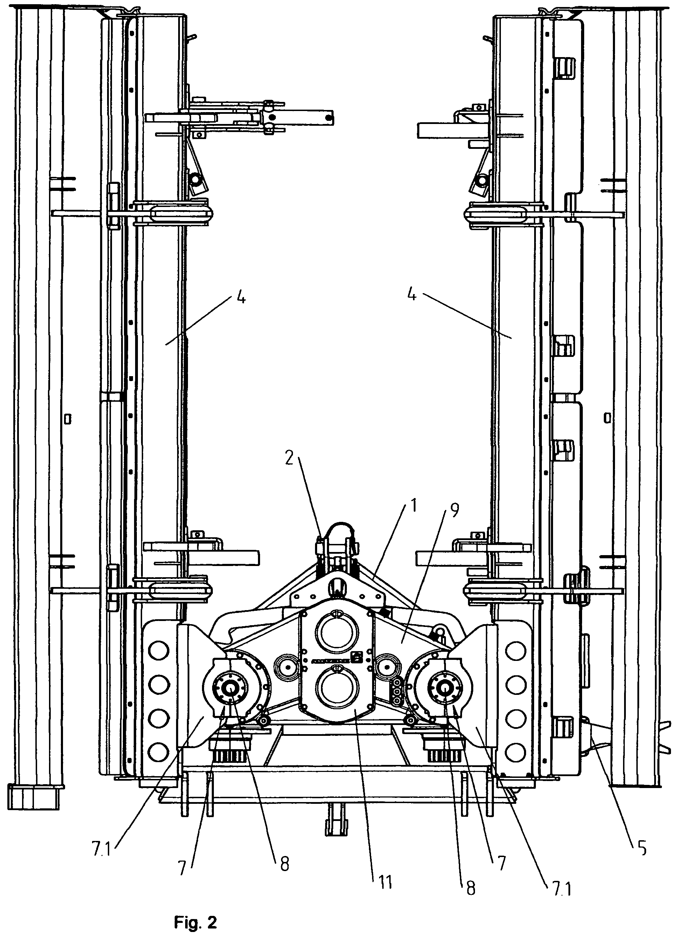

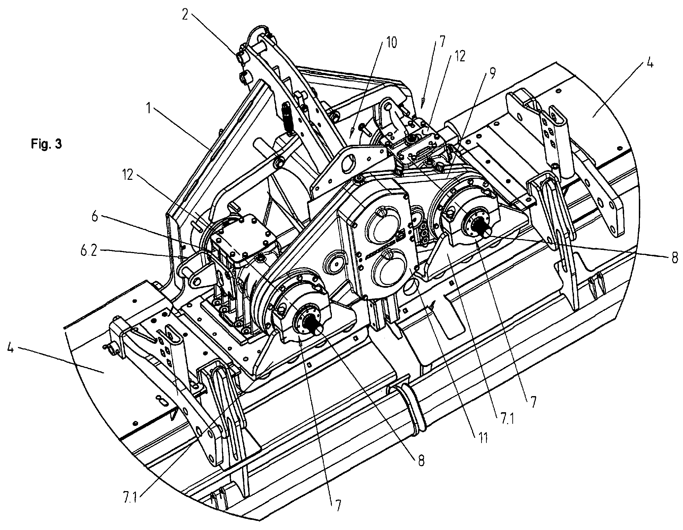

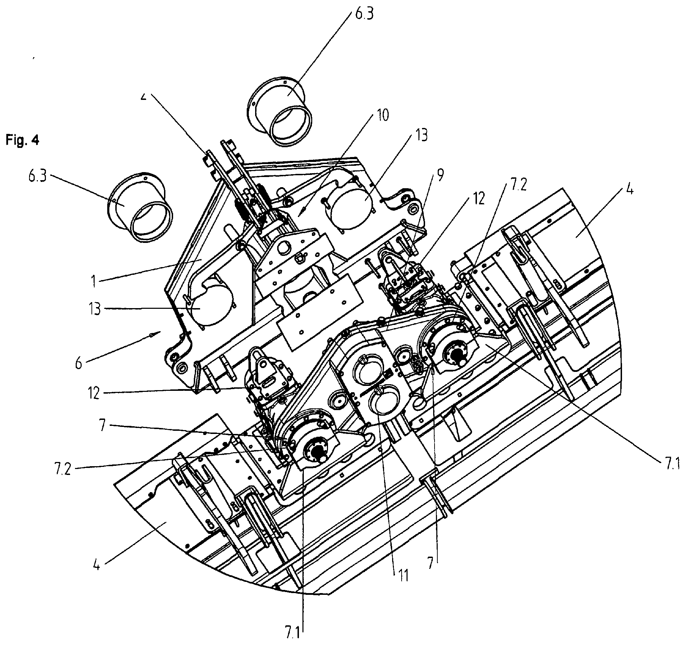

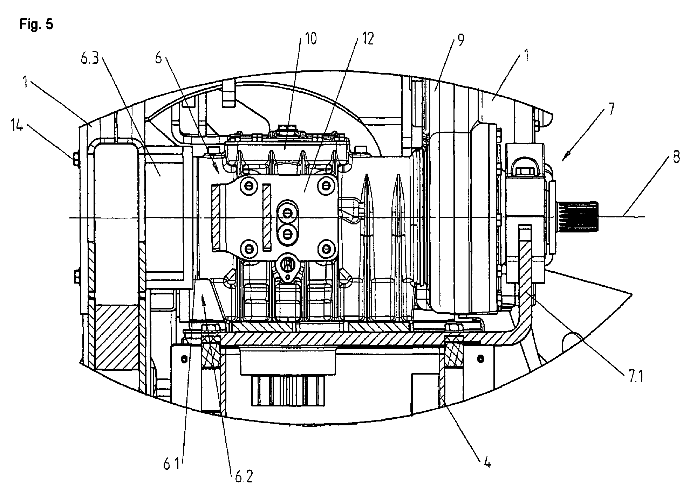

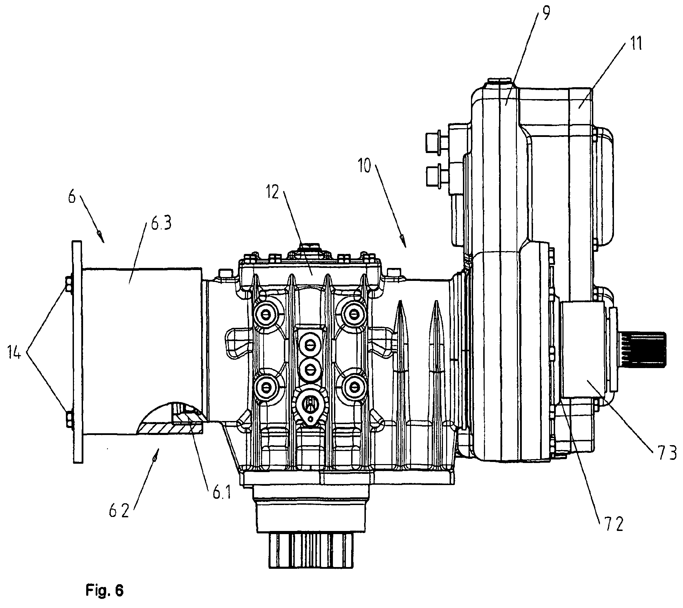

Die Bodenbearbeitungsmaschine gemäß den Fig. 1 bis 6 weist einen Mittelrahmen 1 auf, auf dessen Vorderseite Dreipunktkupplungselemente 2 zum Anbau an dem Dreipunktkraftheber eines Ackerschleppers angeordnet sind. An dem Mittelrahmen 1 sind zwei unmittelbar aneinander anschließende sich quer zur Fahrtrichtung 3 erstreckende und jeweils als Kastenbalken 4 ausgebildete Tragrahmen mit einer Mehrzahl um aufrechte Achsen angetriebenen Werkzeugkreiseln 5 mittels Schwenkgelenken 6 und 7, deren Gelenkachsen 8 in Fahrtrichtung 3 weisen, angeordnet. Die Kastenbalken 4 sind aufgrund ihrer Anordnung mittels Schwenkgelenken 6 und 7 an dem Mittelrahmen 1 um die in Fahrtrichtung 3 verlaufenden Gelenkachsen 8 aus der in Fig.7 dargestellten etwa horizontalen Arbeitsposition um etwa 90° in die in Fig.6 dargestellten etwa vertikale Transportposition zu verschwenken. Hierzu sind zwischen dem Mittelrahmen 1 und den Kastenbalken 4 nicht dargestellte motorische Stellelemente, beispielsweise doppeltwirkende Hydraulikzylinder angeordnet.

Die Kastenbalken 4 sind als Getriebegehäuse ausgebildet, in welchen die Werkzeugkreisel 5 gelagert sind. In den Kastenbalken 4 sind Stirnräder angeordnet, die auf den Wellen der Werkzeugkreisel 5 angeordnet sind. Einander benachbarte Werkzeugkreisel 5 werden über die Stirnräder im einander entgegengesetzten Drehsinn angetrieben.

An dem Mittelrahmen 1 ist ein Getriebegehäuse 9 aufweisendes Zentralgetriebe 10 mit einer zentralen Antriebswelle, welche über eine Gelenkswelle mit der Zapfwelle des die Bodenbearbeitungsmaschine ziehenden Ackerschleppers verbunden und rotierend angetrieben wird, angeordnet. Weiterhin weist das Getriebegehäuse 9 des Zentralbetriebes 10 zwei beabstandet zueinander und beabstandet zu der zentralen Antriebswelle angeordnete Zwischenwellen auf, die drehbar mittels Lagern in dem Getriebegehäuse 9 des Zentralgetriebes 10 angeordnet sind. Die Drehachse der Zwischenwellen fallen mit den Gelenkachsen 8 der Schwenkgelenke 6 und 7 zusammen.

Weiterhin ist in dem Getriebegehäuse 9 des Zentralbetriebes 10 jeweils ein Stirnradgetriebe zwischen der zentralen Antriebswelle und den Zwischenwellen angeordnet. Über dieses Stirnradgetriebe werden die Zwischenwellen von der zentralen Antriebswelle angetrieben, wobei zwischen den Stirnradgetrieben und der zentralen Antriebswelle ein Zwischengetriebe 11 zur Drehzahlvariation angeordnet sein kann. Die Zwischenwellen treiben jeweils über ein Winkelgetriebe aufweisendes Zwischengetriebe 12 die in den Kastenbalken 4 gelagerten Werkzeugkreiseln 5 rotierend an. Hierzu ist die Abtriebswelle des Zwischenbetriebes in geeigneter Weise kraftschlüssig mit einem einem Werkzeugkreisel 5 zugeordneten Stirnrad verbunden.

Die Schwenkgelenke 7 weisen an den einander benachbarten Endbereichen der Kastenbalken 4 auf ihrer Rückseite tragende Gelenkelemente 7.1 auf. Die Schwenkgelenke 7 weisen weiterhin am Tragrahmen 4 angeordnete Gelenkelemente 7.2 auf, welche mit den an den Kastenbalken 4 angeordneten Gelenkelementen 7.1 zusammenwirken und so die Schwenkgelenke 7 gemeinsam mit den zugeordneten Gelenkbolzen 7.3 bilden.

Die Schwenkgelenke 6 weisen an den einander benachbarten Endbereichen der Kastenbalken 4 auf ihrer Vorderseite tragende Gelenkelemente 6.1 auf. Diese Gelenkelemente 6.1 der Schwenkgelenke 6 sind die als wellenähnliche Ansatzstutzen, die an dem jeweiligen Getriebegehäuse des Zwischengetriebes 12, welches am als Kastenbalken ausgebildeten Tragrahmen 4 angeordnet ist, ausgebildet. Somit ist jeweils eine der an dem Kastenbalken 4 angeordneten Gelenklaschen von dem Getriebegehäuse des Zwischengetriebes 12 gebildet. Im jedem vorderen seitlichen Bereich des Mittelrahmens 1 ist jeweils eine kreisförmige Aussparung 13 angebracht. In diese kreisförmigen Aussparungen 13 sind die hülsenartigen Lagerbuchsen 6.3 eingeschoben, welche quasi den Gelenkbolzen bilden. Diese Lagerbuchsen 6.3 sind jeweils auf die wellenähnlichen Ansatzstutzen 6.1 des Getriebegehäuses des Zwischengetriebes 12 geschoben.

Das jeweilige Getriebegehäuse des Zwischengetriebes 12 bildet also die vordere Gelenklasche 6.1 der Schwenkgelenke 6.

Die vorderen Gelenkelemente 6.1 der vorderen Schwenkgelenke 6 werden über den einschiebbaren Gelenkbolzen 6.3 miteinander verbunden. Dieser als Lagerbuchse ausgebildete Gelenkbolzen 6.3 ist in seiner eingeschobenen Position mittels als Schrauben 14 ausgebildeter Sicherungselemente am Mittelrahmen befestigt und gesichert.

Auf der Rückseite des Mittelrahmens 1 ist das Getriebegehäuse 9 des Zentralgetriebes 10 angeordnet. Der Bereich 9.1 Getriebegehäuses 9 des Zentralgetriebes 10, in dem die Zwischenwellen und das die Zwischenwellen mit der zentralen Antriebswelle verbindende Stirnradgetriebe angeordnet sind, ist tragender Bestandteil des Mittelrahmens 1. In dem Bereich der jeweiligen Lagerung der Zwischenwellen ist an dem Gehäuse 9, 9.1 des Zentralgetriebes 10 das hintere Gelenkelement 7.2, 7.3 des hinteren Schwenkgelenkes 7 angeordnet. Somit ist das Getriebegehäuse 9, 9.1 des Zentralgetriebes 10 tragender Bestandteil des Mittelrahmens 1 und bildet auf jeder Seite der Bodenbearbeitungsmaschine zumindest ein Gelenkelement 7.2, 7.3 des hinteren Schwenkgelenkes 7 am Mittelrahmen 1. Dieses an dem Gehäuse 9, 9.1 des Zentralgetriebe 10 angeordnete Gelenkelement 7.2, 7.3 des hinteren Schwenkgelenkes 7 wird von einem in das Getriebegehäuse 9, 9.1 einschraubbaren Schwenkbolzen 7.3 gebildet. An diesem von dem Schwenkbolzen 7.3 gebildeten Gelenkelement 7, welches an dem Getriebegehäuse 9, 9.1 des Zentralgetriebes 10 angeordnet ist, ist das hintere Gelenkelement 7 des als Kastenbalken 4 ausgebildete Tragrahmen angelenkt. Somit sind jeweils zumindest ein Gelenkelement 7.1 des Tragrahmens 4 und der durch den in das Getriebegehäuse 7.2, 9, 9.1 einschraubbaren Gelenkbolzen 7.3 als Gelenkelement 7 ausgebildete äußere Bereich 9.1 des Getriebegehäuses 9 des Zentralgetriebes 10 ein tragendes Bauteil des Schwenkgelenkes 7 bzw. des Mittelrahmens 1. Somit sind auf der Seite, auf der das Getriebegehäuse 9, 9.1 des Zentralgetriebes 10 angeordnet ist, die Gelenkelemente 7.1, 7.2, 7.3 dieser Schwenkgelenke 7 nur am Getriebegehäuse 9, 9.1 angeordnet. Die Gelenkelemente 7.1, 7.2, 7.3 dieser Schwenkgelenke 7 werden nur von den am Getriebegehäuse 9, 9.1 des Zentralgetriebes 10 angeordneten Schwenkelementen 7.1, 7.2, 7.3 gebildet.

Das an dem Zentralgetriebe 10 angeordnete Schwenkelement 7 ist als Gelenkbolzen 7.3 ausgebildet. Auf dem Außenumfang des Gelenkbolzens 7.3 ist das Schwenkelement 7.1 des Tragrahmens 4 den Gelenkbolzen 7.3 umgreifend angeordnet.

## Patentansprüche

1. Bodenbearbeitungsmaschine mit einem Dreipunktkupplungselemente aufweisenden Mittelrahmen, an denen zwei unmittelbar aneinander anschließende sich quer zur Fahrtrichtung erstreckende und jeweils als Kastenbalken ausgebildete Tragrahmen mit einer Mehrzahl um aufrechte Achsen angetriebenen Werkzeugkreiseln mittels tragende Gelenkelemente aufweisende Schwenkgelenke, deren Gelenkachsen in Fahrtrichtung weisen, aus einer etwa horizontalen Arbeitsstellung in eine etwa vertikale Transportstellung verschwenkbar angeordnet sind, wobei an dem Mittelrahmen ein ein Getriebegehäuse aufweisendes Zentralgetriebe mit einer zentralen Antriebswelle und zwei beabstandet zueinander und beabstandet zu der zentralen Antriebswelle angeordnete Zwischenwellen angeordnet sind, wobei zwischen der zentralen Antriebswelle und den beiden Zwischenwellen in dem Getriebegehäuse jeweils ein Stirnradgetriebe angeordnet ist, wobei die Drehachsen der Zwischenwellen jeweils mit den Gelenkachsen der Schwenkgelenke zusammenfallen, wobei die Zwischenwellen jeweils mit den in den Kastenbalken gelagerten Werkzeugkreisel antreibenden Antriebselemente kraftschlüssig verbunden sind, wobei das Getriebegehäuse des Zentralgetriebes tragender Bestandteil des Mittelrahmens ist und auf jeder Seite der Bodenbearbeitungsmaschine zumindest ein Gelenkelement eines Schwenkgelenkes des Mittelrahmens bildet, wobei die Tragrahmen jeweils zumindest eine vorderen und zumindest eine hintere Gelenklasche der Schwenkgelenk aufweisen, wobei an den jeweils als Tragrahmen ausgebildeten Kastenbalken jeweils ein ein Getriebegehäuse aufweisendes Zwischengetriebe mit Antriebselementen angeordnet ist, **dadurch gekennzeichnet, dass** jeweils eine der an dem Kastenbalken (4) angeordneten Gelenklaschen (6.1) von dem Getriebegehäuse des Zwischengetriebes (12) gebildet wird.

2. Bodenbearbeitungsmaschine nach Anspruch 1, **dadurch gekennzeichnet, dass** das jeweilige Getriebegehäuse des Zwischengetriebes (6.1) die vordere Gelenklasche (6.1) der Schwenkgelenke (6) bildet.

## Claims

1. Soil working machine with a central frame having three-point coupling elements on which two supporting frames, which are directly connected to each other, extend transversely with respect to the direction of travel and are in each case designed as box bars, and have a plurality of rotary tools present about vertical axes, are arranged so as to be pivotable from an approximately horizontal working position into an approximately vertical transport position by means of swivel joints which have supporting joint elements and the joint axes of which point in the direction of travel, wherein a central gearing having a gearing housing and a central drive shaft, and two intermediate shafts which are arranged spaced apart from each other and spaced apart from the central drive shaft, are arranged on the central frame, wherein a spur gearing is arranged in each case in the gearing housing between the central drive shaft and the two intermediate shafts, wherein the axes of rotation of the intermediate shafts each coincide with the joint axes of the swivel joints, wherein the intermediate shafts are each connected non-positively to the driving elements driving rotary tools mounted in the box bars, wherein the gearing housing of the central gearing is a supporting part of the central frame and forms at least one joint element of a swivel joint of the central frame on each side of the soil working machine, wherein the supporting frames each have at least one front and at least one rear joint plate of the swivel joint, wherein a respective intermediate gearing having a gearing housing is arranged with driving elements on the box bars which are designed in each case as supporting frames, **characterized in that** in each case one of the joint plates (6.1) arranged on the box bar (4) is formed by the gearing housing of the intermediate gearing (12).

2. Soil working machine according to Claim 1, **characterized in that** the respective gearing housing of the intermediate gearing (6.1) forms the front joint plate (6.1) of the swivel joints (6).

## Revendications

1. Machine de traitement de sol avec un châssis central comportant des éléments de couplage à trois points au niveau desquels deux cadres porteurs directement connexes s'étendant transversalement à la direction de conduite et respectivement réalisés sous la forme d'une poutre en caisson sont disposés de façon à pouvoir pivoter, avec une pluralité d'outils rotatifs entraînés autour d'axes droits à l'aide d'articulations pivotantes comportant des éléments articulés porteurs dont les axes d'articulation sont orientés dans la direction de conduite, d'une position de travail approximativement horizontale dans une position de transport approximativement verticale, un engrenage central comportant un carter d'engrenage étant disposé au niveau du châssis central, avec un arbre d'entraînement central et deux arbres intermédiaires disposés à une certaine distance l'un de l'autre et à une certaine distance de l'arbre d'entraînement central, un engrenage à roue avant étant respectivement disposé entre l'arbre d'entraînement central et les deux arbres intermédiaires dans le carter d'engrenage, les axes de rotation des arbres intermédiaires coïncidant respectivement avec les axes d'articulation des articulations pivotantes, les arbres intermédiaires étant respectivement reliés par complémentarité de forces aux éléments d'entraînement entraînant les outils rotatifs disposés dans la poutre en caisson, le carter d'engrenage de l'engrenage central étant un composant porteur du châssis central et formant sur chaque côté de la machine de traitement de sol au moins un élément d'articulation d'une articulation pivotante du châssis central, les cadres porteurs présentant respectivement au moins une bride articulée avant et au moins une bride articulée arrière des articulations pivotantes, un engrenage intermédiaire avec des éléments d'entraînement et comportant un carter d'engrenage étant disposé respectivement au niveau des poutres en caisson respectivement réalisées sous la forme de cadres porteurs, **caractérisée en ce que** respectivement une des brides articulées (6.1) disposée au niveau de la poutre en caisson (4) est formée par le carter d'engrenage de l'engrenage intermédiaire (12).

2. Machine de traitement de sol selon la revendication 1, **caractérisée en ce que** le carter d'engrenage respectif de l'engrenage intermédiaire (6.1) forme la bride articulée (6.1) avant des articulations pivotantes (6).
